# EUROPEAN PATENT SPECIFICATION

(11) **EP 0 554 289 B1**
(45) Date of publication and mention of the grant of the patent: **28.02.1996**
(21) Application number: 91918086.9
(22) Date of filing: 22.10.1991
(51) Int. Cl.: G01K 1/14

(54) **MOUNTING A SENSOR IN A COMBUSTION CHAMBER**
MONTAGE EINES SENSORS IN EINEM VERBRENNUNGSRAUM
MONTAGE D'UN CAPTEUR DANS UNE CHAMBRE DE COMBUSTION

(30) Priority: 24.10.1990 GB 9023097
(43) Date of publication of application: 11.08.1993
(73) Proprietor: FORD-WERKE AKTIENGESELLSCHAFT, D-50725 Köln (DE); FORD MOTOR COMPANY LIMITED, Brentwood, Essex CM13 3BW (GB); FORD FRANCE S. A., F-92506 Rueil-Malmaison Cédex (FR)
(72) Inventor: MA, Thomas, Tsoi-Hei 1 Collingwood Road, Chelmsford Essex CM3 5YB (GB)
(74) Representative: Messulam, Alec Moses
(86) International application number: GB9101845
(87) International publication number: WO9208112

(56) References cited:
- EP-A- 0 451 374
- WO-A-89/03520
- US-A- 4 890 498
- PATENT ABSTRACTS OF JAPAN vol. 12, no. 269 (M-723)27 July 1988 & JP,A,63 050 657
- PATENT ABSTRACTS OF JAPAN vol. 3, no. 116 (M-74)27 September 1979 & JP-A-54 093 734

## Description

### Field of the invention

The present invention relates to the mounting of a sensor in a combustion chamber of an internal combustion engine.

### Background of the invention

Various control systems have been proposed which rely on a signal derived by monitoring the combustion in a combustion chamber of an engine. For example, it has been proposed to mount pressure sensors, optical sensors and ionisation sensors to measure combustion quality and flame propagation speed. Other control system require the mounting of a temperature sensor in the combustion chamber.

Conventionally, such combustion chamber sensors have been mounted in the same way as a spark plug, that is to say by being fitted into a straight hole opening into the combustion chamber. This method of mounting, however, is not ideal because the top of the combustion chamber is overcrowded and it is difficult to form a straight hole opening to the outside through which the sensor must be introduced. In this respect, it should be remembered that the cylinder head includes the valves, valve ports and valve drive train, spark plugs, water jacket, oil galleries, intake and exhaust manifolds and various other elements which place constraints on where a sensor can be mounted.

Even if it is possible to mount a sensor in this way, its position may not be ideally suited to its purpose. For example, the sensor may need to be very close to the spark plug and if the sensor is an ionisation sensor being used to measure flame propagation speed then it should be as far away from the spark plug as possible. Similarly, a temperature sensor is normally required to be mounted in a specific part of a combustion chamber and cannot simply be installed wherever the engine cylinder head configuration so dictates.

US Patent No. 4,393,687 suggests in the case of an optical sensor to integrate an optical receiver in the spark plug, in a pre-chamber or in the cylinder head seal. These three proposals are limited to the type of sensor that may be used and they still suffer from some of the disadvantages discussed above.

WO-A-8 903 520 discloses a sensor mounted within a combustion chamber of an engine in the form of a gasket.

### Object of the invention

The invention seeks to provide a sensor mounting which reduces the constraints on the positioning of the sensor within the combustion chamber and is applicable to different types of sensor.

### Summary of the invention

According to the present invention, there is provided an internal combustion engine having a sensor mounted within a combustion chamber of the engine, wherein the sensor includes or forms part of a sealing plug fitted into a bore in the wall of the combustion chamber and urged by the combustion chamber pressure against a shoulder in the bore and wherein a tube cast into the cylinder head or cylinder block opens into the bore to allow an external connection to be made to the sensor for the transmission of data.

Depending on the nature of the sensor, the data may be transmitted either through electrical wires or optical fibres. In either case, the transmission medium may either be permanently connected to the plug and threaded into the cast-in tube prior to assembly of the cylinder head on the engine block, or it may be introduced from the outside to come to make contact with the sensor plug after its installation. The latter method, when possible, is preferred as it allows the sensor cable to be replaced without the need to dismantle the cylinder head from the engine block.

The invention essentially divorces the positioning of the sensor within the combustion chamber from the problems involved in establishing a connection with the sensor. The cast-in tube may follow a circuitous or even tortuous path in reaching the outside and may circle around obstruction or bridge across open space in the water jacket or oil galleries.

The sensor may be an ionisation sensor in which case the plug may comprise an outer conductive case and a central electrode insulatedly mounted in the case.

For an optical sensor, a window may be fitted into the plug and viewed through an optical fibre passing along the cast-in tube.

In the case of a temperature sensor, it is not desirable to place a thermocouple within a combustion chamber but if the plug is machined with a very thin end wall, then the thermocouple can be placed very close to the combustion chamber surface.

A pressure sensor may be piezoelectric or it may be formed by metal diaphragm on the end surface of the plug, movement of which is detected optically or electrically.

### Brief description of the drawings

The invention will now be described further, by way of example, with reference to the accompanying drawings, in which:
Figure 1 is a section through a cylinder head fitted with a combustion sensor,
Figure 2 is a detail of a plug which forms part of an ionisation sensor,
Figure 3 is a detail of a plug which forms part of an optical sensor,
Figure 4 is a detail of a plug which forms part of a thermocouple temperature sensor, and
Figure 5 is a detail of a plug which forms part of a pressure sensor.

### Description of the preferred embodiments

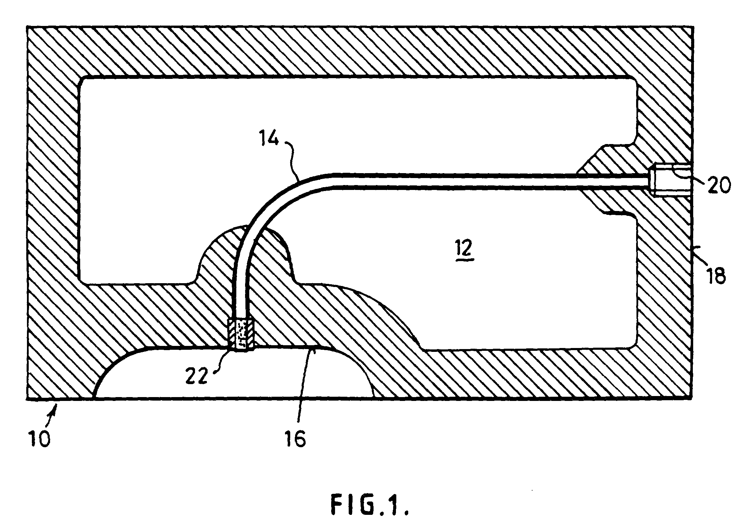

In Figure 1, there is schematically shown a section through a cylinder head 10 passing through the water jacket 12. In the casting of the cylinder head 10, a tube 14 is cast in situ leading from a combustion chamber wall 16 to an external wall 18 of the cylinder head 10. The tube can follow any suitable path and may, as illustrated, pass through the water jacket 12. The technology for casting tubes in situ is known from other applications and need not therefore be described in detail in the present context. The tube 14 may be formed of a material having a higher melting point that the material of the cylinder head casting so that it does not deform during the casting process.

After the tube 14 has been cast in situ, bores 20 and 22 are drilled into the cylinder head to connect with the internal bore of the tube 14. There is thereby formed a continuous passage leading to the combustion chamber from the outside, for receiving a sensor and making an external connection to the sensor. The path need not the straight and can pass around obstacles and through open spaces, as illustrated.

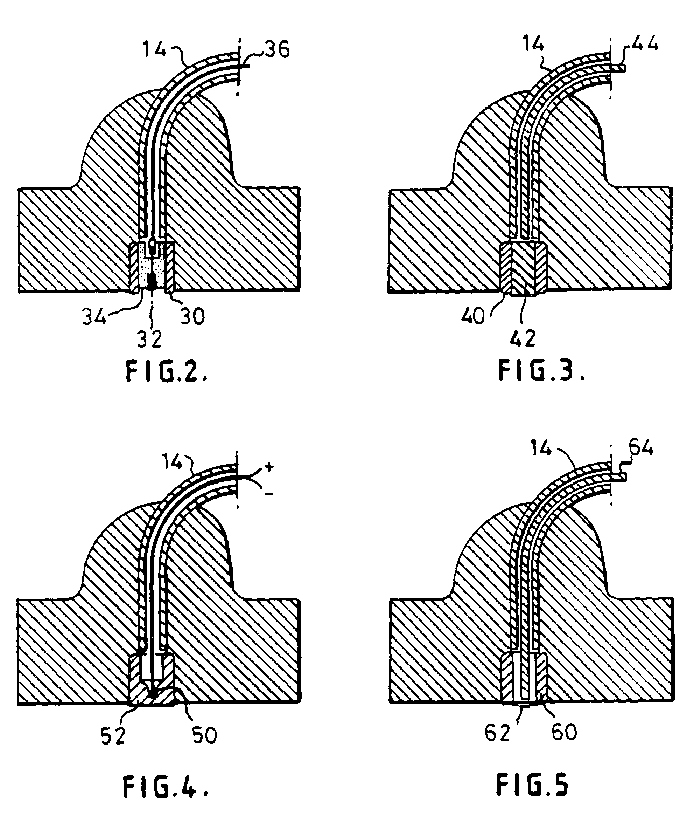

The bore 22 drilled into the combustion chamber is of larger diameter than the bore in the tube 14 and thereby forms a shoulder against which a plug may be fitted to seal the combustion chamber. This plug can contain or form part of a sensor and different forms of sensor are described below by reference to Figures 2 to 5. In all cases, the plug is an interference fit in the bore and the sealing is improved by the fact that the pressure in the combustion chamber acts in the direction of urging the plug against the shoulder in the bore 22. Because of this method of fixing in position, the sensor can only be assembled from inside the combustion chamber and must be inserted into the bore 22 before the head is assembled on the engine block. The cable connecting the plug to the exterior may be introduced from the outside or, if it is permanently connected to the plug, from the combustion chamber end of the tube 14.

Figure 2 shows a plug intended as an ionisation sensor. The plug has an outer case 30 a central electrode 32 and insulation 34 surrounding the central electrode in much the same way as a spark plug. If the central electrode has a pointed end projecting from the rear of the plug, then a wire 36 guided from the outside onto the plug will automatically establish an electrical connection with the central electrode.

In Figure 3, the plug is not itself a sensor but acts as the end of a probe for an optical sensor. The case 40 has a window 42 through which the flame in the combustion chamber may be viewed, light being transmitted by an optical fibre or cable 44 in the tube 14. Such a sensor has a variety of uses as it can detect flame arrival time as well as the colour of the flame which is itself indicative of combustion quality.

Figure 4 shows a temperature sensor consisting of a thermocouple 50 housed in a plug 52 machined with a thin end wall so that the thermocouple junction lies in the immediate vicinity of the combustion chamber.

In Figure 5, the end face of the plug 60 is a metal diaphragm 62 and is viewed from the rear by an optical cable 64. Movement of the diaphragm 62 by pressure changes modifies the reflection of laser light by the rear of the diaphragm and using known interference techniques the combustion pressure can be measured externally. Alternatively, a piezoelectric transducer may be mounted in the plug to sense pressure changes.

## Claims

1. An internal combustion engine having a sensor mounted within a combustion chamber of the engine, characterised in that the sensor includes or forms part of a sealing plug (30,40,52,60) fitted into a bore (22) in the wall (16) of the combustion chamber and urged by the combustion chamber pressure against a shoulder in the bore (22) and in that a tube (14) cast into the cylinder head (10) or cylinder block opens into the bore (22) to allow an external connection to be made to the sensor for the transmission of data.

2. An engine as claimed in claim 1, wherein the data from the sensor is transmitted by an electrical conductor (36) passing through the cast-in tube (14).

3. An engine as claimed in claim 1, wherein the data from the sensor is transmitted by an optical conductor (44) passing through the cast-in tube (14).

4. An engine as claimed in claim 2 or 3, wherein the conductor is permanently connected to the plug and is introduced into the cast-in tube from the combustion chamber end of the cast-in tube (14).

5. An engine as claimed in claim 2 or 3, wherein the conductor is formed separately from the plug and is introduced into the cast-in tube from the exterior end of the cast-in tube (14).

6. An engine as claimed in any preceding claim, wherein the sensor is an ionisation sensor, the plug comprising an outer conductive case (30) and a central electrode (32) insulatedly mounted in the case (30).

7. An engine as claimed in any one of claims 1 to 5, wherein the plug forms part of an optical sensor and comprises a transparent window (40).

8. An engine as claimed in any one of claims 1 to 5, in which the sensor comprises a thermocouple (50) junction mounted in a plug (52) having a thin end wall.

9. An engine as claimed in any one of claims 1 to 5, wherein the plug includes a piezoelectric pressure sensor.

10. An engine as claimed in any one of claims 1 to 5, wherein the plug has an end face formed as a flexible diaphragm and (62) forms part of a pressure sensor.

## Patentansprüche

1. Einen Verbrennungsmotor mit einem Sensor, der in einer Verbrennungskammer des Motors eingebaut ist, dadurch gekennzeichnet, daß der Sensor einen abdichtenden Einsatz (30, 40, 52, 60) umfaßt oder einen Teil davon bildet, der in eine Bohrung (22) in der Wand (16) der Verbrennungskammer eingepaßt ist und durch den Druck in der Verbrennungskammer gegen einen Vorsprung in der Bohrung (22) gedrängt wird, und daß ein in den Zylinderkopf (10) oder in den Zylinderblock gegossenes Rohr (14) sich in die Bohrung (22) eröffnet, um das Herstellen einer äußeren Verbindung zum Sensor zwecks Übertragung von Daten zu ermöglichen.

2. Ein Motor nach Anspruch 1, worin die Daten vom Sensor von einem elektrischen Leiter (36) übertragen werden, der durch das eingegossene Rohr (14) verläuft.

3. Ein Motor nach Anspruch 1, worin die Daten vom Sensor von einem optischen Leiter (44) übertragen werden, der durch das eingegossene Rohr (14) verläuft.

4. Ein Motor nach Anspruch 2 oder 3, worin der Leiter ständig mit dem Einsatz verbunden ist und in das eingegossene Rohr von dem zur Verbrennungskammer gerichteten Ende des eingegossenen Rohres (14) her eingeführt wird.

5. Ein Motor nach Anspruch 2 oder 3, worin der Leiter getrennt vom Einsatz gebildet wird und in das eingegossene Rohr von dem nach außen gerichteten Ende des eingegossenen Rohres (14) her eingeführt wird.

6. Ein Motor nach irgendeinem der vorhergehenden Ansprüche, worin der Sensor ein lonisierungssensor ist, wobei der Einsatz ein außen leitfähiges Gehäuse (30) und eine Zentralelektrode (32) umfaßt, die isoliert in das Gehäuse (30) eingebaut ist.

7. Ein Motor nach irgendeinem der Ansprüche 1 bis 5, worin der Einsatz Teil eines optischen Sensors bildet und ein transparentes Fenster (40) umfaßt.

8. Ein Motor nach irgendeinem der Ansprüche 1 bis 5, in dem der Sensor einen Anschluß für das Thermoelement (50) umfaßt, das in einem Einsatz (52) mit einer dünnen Endwand eingebaut ist.

9. Ein Motor nach irgendeinem der Ansprüche 1 bis 5, worin der Einsatz einen piezoelektrischen Drucksensor umfaßt.

10. Ein Motor nach irgendeinem der Ansprüche 1 bis 5, worin der Einsatz eine Endfläche in Form einer flexiblen Membran (62) besitzt und Teil eines Drucksensors bildet.

## Revendications

1. Moteur à combustion interne présentant un capteur monté à l'intérieur de la chambre de combustion du moteur, caractérisé en ce que le capteur inclut ou fait partie d'un bouchon d'étanchéité (30, 40, 52, 60) fixé dans un alésage (22) dans la paroi (16) de la chambre de combustion et poussé par la pression de la chambre de combustion contre un épaulement dans l'alésage (22) et en ce qu'un tube (14) intégré dans la tête de cylindre (10) ou le bloc-cylindres s'ouvre dans l'alésage (22) afin de permettre une connexion externe avec le capteur pour la transmission de données.

2. Moteur selon la revendication 1, dans lequel les données provenant du capteur sont transmises par un conducteur électrique (36) passant à travers le tube intégré (14).

3. Moteur selon la revendication 1, dans lequel les données provenant du capteur sont transmises par un conducteur optique (36) passant à travers le tube intégré (14).

4. Moteur selon la revendication 2 ou 3, dans lequel le conducteur est relié en permanence au bouchon et est introduit dans le tube intégré depuis l'extrémité du tube intégré (14) dirigée vers la chambre de combustion.

5. Moteur selon la revendication 2 ou 3, dans lequel le conducteur est formé séparément du bouchon et est introduit dans le tube intégré depuis l'extrémité dirigée vers l'extérieur du tube intégré (14).

6. Moteur selon l'une des revendications précédentes, dans lequel le capteur est un capteur d'ionisation, le bouchon comprenant un boîtier conducteur externe (30) et une électrode centrale (32) montée de manière isolée dans le boîtier (30).

7. Moteur selon l'une des revendications 1 à 5, dans lequel le bouchon fait partie d'un capteur optique et comprend une fenêtre transparente.

8. Moteur selon l'une des revendications 1 à 5, dans lequel le capteur comprend une jonction de thermocouple (50) montée dans un bouchon (52) présentant une paroi terminale fine.

9. Moteur selon l'une des revendications 1 à 5, dans lequel le bouchon inclut un capteur de pression piézo-électrique.

10. Moteur selon l'une des revendications 1 à 5, dans lequel le bouchon présente une face terminale formée comme un diaphragme flexible (62) et fait partie d'un capteur de pression.
